(19) **Europäisches Patentamt / European Patent Office / Office européen des brevets**

(11) **EP 2 871 443 A1**

(12) # EUROPÄISCHE PATENTANMELDUNG

(43) Veröffentlichungstag:
**13.05.2015  Patentblatt 2015/20**

(51) Int Cl.:
*G01B 21/04* (2006.01)   *G01B 3/30* (2006.01)

(21) Anmeldenummer: **14003772.2**

(22) Anmeldetag: **10.11.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **11.11.2013   DE 102013222927**

(71) Anmelder: **Bundesrepublik Deutschland, vertreten durch das Bundesministerium für Wirtschaft und Technologie, dieses vertreten durch den Präsidenten der 38116 Braunschweig (DE)**

(72) Erfinder:
• **Wiegmann, Axel**
  **38176 Wendeburg (DE)**
• **Schulz, Michael**
  **38550 Isenbüttel (DE)**
• **Blobel, Gernot**
  **38114 Braunschweig (DE)**

(74) Vertreter: **Plöger, Jan Manfred et al**
**Gramm, Lins & Partner GbR**
**Theodor-Heuss-Strasse 1**
**38122 Braunschweig (DE)**

(54) **Asphärennormal und Verfahren zum Herstellen eines Asphärennormals**

(57)    Die Erfindung betrifft ein Asphärennormal, das gebildet ist durch eine Kugel oder einen Teil einer Kugel, in dessen Oberfläche eine Struktur eingebracht ist, wobei die Abweichung der Oberfläche von einer idealen Kugeloberfläche durch eine stetig differenzierbare Funktion f beschreibbar ist, wobei die Struktur zumindest vier Referenzpunkte aufweist, in denen die Funktion f null ist und die erste Ableitung der Funktion null ist und wobei die Funktion zwischen den Referenzpunkten von null verschieden ist.

Fig. 2

EP 2 871 443 A1

**Beschreibung**

Die Erfindung betrifft ein Normal. Bei der Fertigung von optischen Komponenten müssen häufig Asphären vermessen worden, Die Kalibrierung von Messgeräten, mittels denen die Maßhaltigkeit von Asphären gemessen wird, stellt bislang ein Problem dar. Der Grund hierfür ist, dass ein Normal, mit dem die Messvorrichtung kalibriert werden soll, mit einer hohen Genauigkeit relativ zum Messgerät ausgerichtet werden muss. Jeder Positionsfehler des Normals im zu kalibrierenden Messgerät führt zu einem überproportional großen Messfehler bei der Vermessung der Oberfläche, Asphärennormale, mittels denen die Maßhaltigkeit von Asphären rückführbar gemessen werden können, sind daher bislang nicht verfügbar.

Zur Vermessung von Asphären werden taktile Messverfahren, beispielsweise Koordinatenmessgeräte, aber auch optische Messverfahren eingesetzt. Optische Messverfahren und taktile Messverfahren reagieren jedoch grundverschieden auf Steigungen und Krümmungen der Asphären. Kleine Ortswellenlängen, das heißt systematische Oberflächenimperfektionen, die durch eine Sinusfunktion mit einer kleinen Wellenlänge besser beschrieben werden können als durch eine Sinusfunktion mit einer größeren Wellenlänge, sind durch taktile Messverfahren nur sehr schlecht nachzuweisen. Ein derartiges Normal ist daher nur schlecht mit einer Koordinatenmessmaschine rückführbar kalibrierbar.

Aus der DE 10 2006 035 022 A1 ist bekannt, Apparaturen zur Asphärenvermessung mit Kalibrierkörpern mit sphärischen oder rotationssymmetrisch asphärischen Oberflächen oder mit einer Freiformoberfläche zu kalibrieren. Nähere Angaben zur Art der Kalibrierkörper finden sich in der Druckschrift nicht.

Der Erfindung liegt die Aufgabe zugrunde, die Messgenauigkeit bei der Vermessung von Asphären zu verbessern.

Die Erfindung löst das Problem durch ein Asphärennormal mit den Merkmalen von Anspruch 1.

Vorteilhaft an diesem Asphärennormal ist, dass es überhaupt erst möglich ist, Asphären-Messgeräte rückführbar zu kalibrieren. Der Erfindung liegt die Erkenntnis zugrunde, dass Kugeln mit einer hohen Fertigungsgenauigkeit hergestellt werden können, In den Referenzpunkten ist die Oberfläche des Asphärennormals unverändert, so dass die Lage des Asphärennormals im Asphären-Messgerät anhand der Referenzpunkte mit hoher Genauigkeit bestimmt werden kann. Zwischen den Referenzpunkten ist die Funktion zudem von null verschieden und stetig differenzierbar, insbesondere im mathematischen Sinne glatt, so dass die Abweichung von der idealen Kugelgestalt mit interferometrischen Verfahren bestimmt werden kann, ohne dass ein Phasensprung zu befürchten ist. Es wird daher ein Asphärennormal erhalten, das mit sehr hoher Genauigkeit rückführbar kalibrierbar ist.

Im Rahmen der vorliegenden Beschreibung wird unter einem Asphärennormal ein Normal verstanden, das zur Überwachung und Korrektur eines Messprozesses ausgebildet ist. Ein Normal umfasst stets einen zugehörigen Kalibrierschein, in dem die relevanten Größen, im vorliegenden Fall die Positionen und Abmaße der Referenzkörper angegeben sind.

Unter dem Merkmal, dass die Funktion f stetig differenzierbar ist, wird insbesondere verstanden, dass die Funktion auf zumindest 99% der Oberfläche des Asphärennormals unendlich oft stetig differenzierbar ist. Es ist möglich, dass die Funktion f nicht in allen Punkten stetig differenzierbar ist. Ist die Funktion f beispielsweise abschnittsweise definiert, ist es möglich, dass die Funktion f an den Intervallgrenzen lediglich stetig, nicht aber stetig differenzierbar ist. Vorzugsweise ist die Funktion zumindest außerhalb von Abschnittsgrenzen, wenn die Funktion abschnittsweise definiert ist, im mathematischen Sinne glatt.

Unter dem Merkmal, dass die erste Ableitung der Funktion in den zumindest Referenzpunkten null ist, wird insbesondere verstanden, dass die Funktion in diesen Referenzpunkten durch eine Ebene approximierbar ist, wobei die Differenz zwischen der Ebene und der Funktion nicht linear, sondern quadratisch oder in höherer Ordnung des Abstands vom Referenzpunkt zunimmt. Die erste Ableitung ist in anderen Worten das totale Differenzial. Insbesondere kann die Oberfläche des Asphärennormals in den Referenzpunkten durch die ideale Kugeloberfläche beschrieben werden, wobei eine Abweichung zwischen der Oberfläche des Asphärennormals und der Kugeloberfläche nicht linear, sondern qua dratisch oder in höherer Ordnung des Abstand von Referenzpunkt zunimmt.

Insbesondere existieren mehrere Punkte zwischen den Referenzpunkten, in denen die Funktion von null verschieden ist. Günstig ist es, wenn die Funktion in diesen Punkten zumindest partiell, insbesondere total differenzierbar ist.

Gemäß einer bevorzugten Ausführungsform besitzt die Funktion f eine Ortswellenlänge, wobei sich die Ortswellenlänge in Abhängigkeit von einem Abstand von einem Nullpunkt stetig, insbesondere monoton, ändert. Unter dem Merkmal, dass sich die Ortswellenlänge monoton ändert, wird insbesondere verstanden, dass die Ortswellenlänge entweder monoton zunimmt oder monoton abnimmt. Unter einer monotonen Zunahme wird verstanden, dass bei zunehmendem Abstand die Ortswellenlänge nicht kleiner wird. Unter dem Merkmal, dass sich die Ortswellenlänge stetig ändert, wird eine stetige Änderung im mathematischen Sinne verstanden. Vorteilhaft hieran ist, dass das zu kalibrierende Asphären-Messgerät in seiner Messgenauigkeit beim Vorliegen von verschiedenen Ortswellenlängen untersucht werden kann. Die Messung der Formabweichung einer Asphäre ist ein nicht-linearer Messvorgang, so dass von der Messgenauigkeit bei einer ersten Ortswellenlänge nicht auf die Messgenauigkeit bei einer zweiten, von der ersten verschiedenen Ortswellenlänge geschlossen werden kann.

Vorzugsweise hat das Asphärennormal die Form einer Kugelkalotte, in die die Struktur eingebracht ist. Es lässt sich mit anderen Worten auch sagen, dass das Asphärennormal eine kugelförmige oder kugelkalottenförmige Grundgestalt hat.

Vorzugsweise ist die Funktion eine Kosinusfunktion, eine Sinusfunktion oder eine Summe aus Kosinus- und Sinusfunktion. Günstig ist, wenn die Funktion f nicht von einer Radialkomponente abhängt, In anderen Worten ist die Funktion rotationssymmetrisch um eine Achse, die im Folgenden als z-Achse betrachtet wird. Der Abstand von dem Nullpunkt ist in diesem Fall der Abstand von der z-Achse. Vorteilhaft an der Rotationssymmetrie ist, dass die Orientierung des Asphärennormals relativ zum zu kalibrierenden Asphären-Messgerät in guter Näherung keine Rolle spielt, solange die Referenzpunkte korrekt ausgerichtet sind.

Gemäß einer alternativen Ausführungsform ist die Funktion f ein Produkt aus einer nur von dem Polarwinkel, nicht aber dem Azimutalwinkel abhängenden Funktion und einer nur von dem Azimutalwinkel, nicht aber dem Polarwinkel abhängenden Funktion. Auf diese Weise ergibt sich eine Funktion, die sowohl hinreichend symmetrisch ist als auch neben verschiedenen Ortswellenlängen unterschiedliche Amplituden für gleiche Ortswellenlängen aufweist.

Günstig ist es, wenn für die Funktion f

$$\Delta r = f(\vartheta, \varphi) = chirp(\vartheta) M(\varphi) \quad mit \quad chirp(\vartheta) = k\left(-1 + \cos\left[\frac{2\pi}{\lambda(\vartheta)}\vartheta\right]\right)$$

gilt. Gemäß einer bevorzugten Ausführungsform gilt 10 nm < k < 10 $\mu$m. Vorzugsweise ist $\lambda(\vartheta)$ so gewählt ist, dass die Ortswellenlänge $\lambda$ innerhalb eines Wellenzuges konstant ist. Alternativ kann $\lambda$ proportional zu $\vartheta$ sein.

$M(\varphi)$ ist vorzugsweise als Kosinusfunktion beschreibbar ist. Es sei darauf hingewiesen, dass die tatsächliche Formulierung der Funktionen $M(\varphi)$ oder $chirp(\vartheta)$ von der angegebenen abweichen kann, beispielsweise kann die gleiche Funktion auch durch eine Sinusfunktion beschrieben werden oder als Produkt als Sinus- und Kosinusfunktion,

Günstig ist es, wenn ein Quotient aus einer größten Ortswellenlänge und einer kleinsten Ortswellenlänge zumindest 5, insbesondere zumindest 7 beträgt. Das führt dazu, dass das Asphären-Messgerät an einer Vielzahl an unterschiedlichen Ortswellenlängen kalibriert werden kann.

Vorzugsweise ist die Funktion f ein Zernike-Polynom oder eine Summe von Zernike-Polynomen, die entweder nur Astigmatismus-Terme oder nur Koma-Terme enthält. Die Zernike-Polynome sind besonders gut geeignet, um reine Abbildungsfehler zu beschreiben. Vorzugsweise beträgt die maximale Abweichung der Oberfläche von einer idealen Kugeloberfläche maximal 10 $\mu$m und mindestens 10 nm.

Alternativ ist das Asphärennormal gebildet durch eine Kugel oder einen Teil einer Kugel mit einem Kugelradius, in dessen Oberfläche eine Struktur eingebracht ist, wobei die Oberfläche einen ersten Abschnitt und zumindest einen zweiten Abschnitt hat, so dass die Oberfläche im ersten Abschnitt eine relative Abweichung höchstens $10^{-5}$ vom Kugelradius hat und dass die Oberfläche im zweiten Abschnitt einen Krümmungsradius hat, der zumindest um 10 $\mu$m vom Kugelradius abweicht. Vorteilhaft hieran ist, dass ein solches Normal mit einem Standard-Radius-Messverfahren messbar ist.

Besonders günstig ist es, wenn das Asphärennormal zumindest vier Abschnitte aufweist, die längenkreisartig nebeneinander angeordnet ist und in Azimutalrichtung glatt ineinander übergehen. Beispielsweise können die Übergänge durch eine Kosinusfunktion beschreibbar sein.

Günstig ist es, wenn die Oberfläche eine gerade Anzahl an Abschnitten hat, wobei jeweils einander gegenüberliegende Abschnitte den gleichen Krümmungsradius haben und wobei sich die Krümmungsradien paarweise um zumindest 10 $\mu$m unterscheiden. Das führt dazu, dass die gegenüberliegenden Abschnitte durch Ausgleichskreise beschrieben werden können. Das ermöglicht die Kalibrierung eines Asphären-Messgeräts auf seine Messgenauigkeit bei der Erfassung von unterschiedlichen Krümmungsradien.

Erfindungsgemäß ist zudem ein Verfahren zum Herstellen eines Asphärennormals, mit den Schritten (i) Herstellen einer Kugel oder eines Teils einer Kugel, insbesondere einer Kugelkalotte, mit einer Formabweichung von weniger als 100 nm von einer idealen Kugelform und (ii) Einbringen einer Struktur in einer Oberfläche der Kugel oder des Teils der Kugel, wobei eine Abweichung der Oberfläche von einer idealen Kugeloberfläche durch eine zweimal stetig differenzierbare Funktion beschreibbar ist und wobei die Struktur zumindest vier, insbesondere sechs Referenzpunkte aufweist, in denen die erste Ableitung der Funktion null ist. Vorzugsweise ist in den Referenzpunkten zudem die Funktion null und die zweite Ableitung null.

Im Folgenden wird die Erfindung anhand der beigefügten Zeichnungen näher erläutert. Dabei zeigt:

Figur 1a     schematisch ein Asphärennormal zur Darstellung des relevanten Koordinatensystems,

Figur 1b     das Asphärennormal mit Benennung der Koordinaten,

Figur 2       eine Höhenlinien-Darstellung der Funktion f gemäß einer bevorzugten Ausführungsform eines erfindungsgemäßen Asphärennormals,
Figur 3       den Radialanteil der Funktion f in Abhängigkeit vom Polarwinkel ϑ,
Figur 4a     einen beispielhaften Verlauf der Ortswellenlänge in Abhängigkeit von dem Polarwinkel ϑ,
Figur 4b     einen zweiten beispielhaften Verlauf der Ortswellenlänge in Abhängigkeit von dem Polarwinkel ϑ,
Figur 5       eine Darstellung einer Modulationsfunktion in Abhängigkeit von dem Azimutalwinkel φ,
Figur 6a     eine Höhenlinien-Darstellung der Funktion f für ein Asphärennormal gemäß einer zweiten Ausfohrungsform
            der Erfindung,
Figur 6b     eine dreidimensionale Darstellung der Funktion f gemäß Figur 6a,
Figur 7       eine Höhenlinien-Darstellung einer Funktion f für eine weitere Ausführungsform eines erfindungsgemäßen
            Asphärennormals und
Figur 8       eine weitere Höhenlinien-Darstellung für eine Funktion f für eine weitere Ausführungsform eines erfindungsgemäßen Asphärennormals.

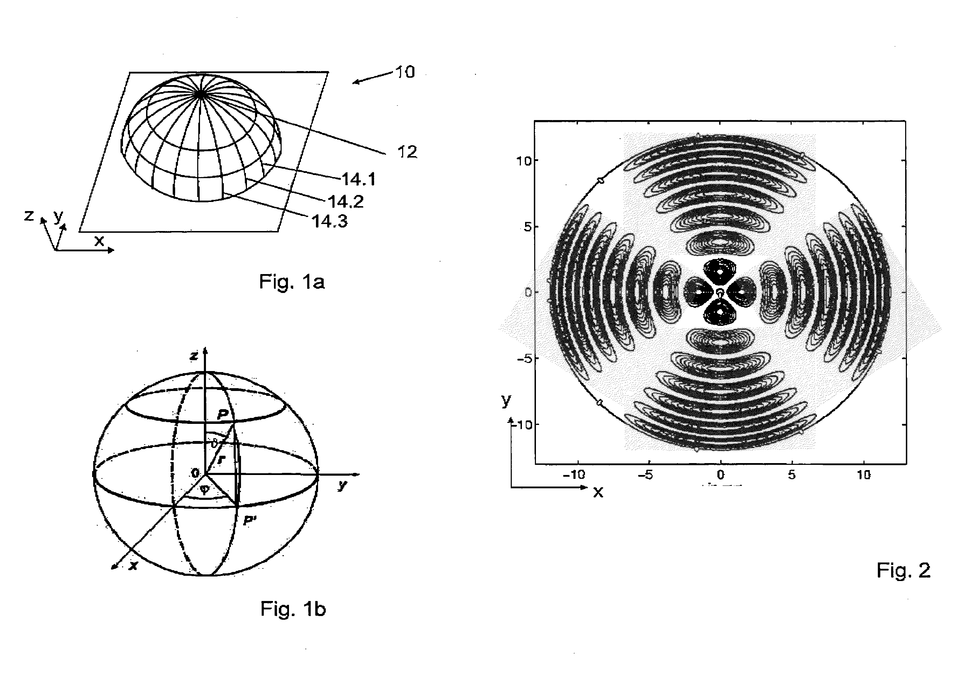

Figur 1a zeigt schematisch ein Asphärennormal 10, das eine kugelkalottenförmige Grundgestalt hat. Es ist eine Polarregion 12 dargestellt, von der aus gedachte Längenkreise 14.1, 14.2 ausgehen. Figur 1b zeigt die Nomenklatur für einen Polarwinkel, einen Azimutalwinkel φ, die Radialkomponente r sowie die drei kartesischen Achsen, Im Fall einer Kugelkalotte liegt der Polarwinkel in einem Intervall$\vartheta \in [-\vartheta_{max}, \vartheta_{max}]$. Dabei gilt vorzugsweise $\vartheta_{max} \in [-50°, 50°]$. In allen Ausführungsformen beträgt der Kugelradius R1 zwischen 1 und 10 Millimeter. Die Oberflächenkontur des Asphärennormals kann also beschrieben werden durch eine Abweichung Δr von einer Kugel mit dem Kugelradius R1,
[0025]   Figur 2 zeigt die Abweichung Δr, für die gilt:

$$\Delta r = f(\vartheta, \varphi) = chirp(\vartheta) M(\varphi)$$

mit

$$\Delta r = f(\vartheta, \varphi) = chirp(\vartheta) M(\varphi) \quad mit \quad chirp(\vartheta) = k\left(-1 + \cos\left[\frac{2\pi}{\lambda(\vartheta)}\vartheta\right]\right),$$

k = 100 nm,

$$M(\varphi) = \frac{1}{2}(\cos(N\varphi) + 1)$$

mit N=4
Für N kann jede ganze Zahl gewählt werden, besonders günstig ist N = 1, ...10. In anderen Worten ist die Abweichung der Oberfläche von der idealen Kugeloberfläche, die durch Δr beschrieben wird, als Produkt zweier Funk- tionen geschrieben werden kann, wobei die erste Funktion *chirp*(ϑ) lediglich vom Polarwinkel ϑ abhängt, die zweite nur vom Azimutaiwinkel φ. Auf diese Weise ergibt sich eine Struktur mit einem weiten Spektrum an Ortswellenlängen und zudem unterschiedlichen Amplituden zu jeder Ortswellenlänge. Mit einem derartigen Asphärennormal können typische Messfehler von Asphären-Messgeräten besonders gut erfasst werden.

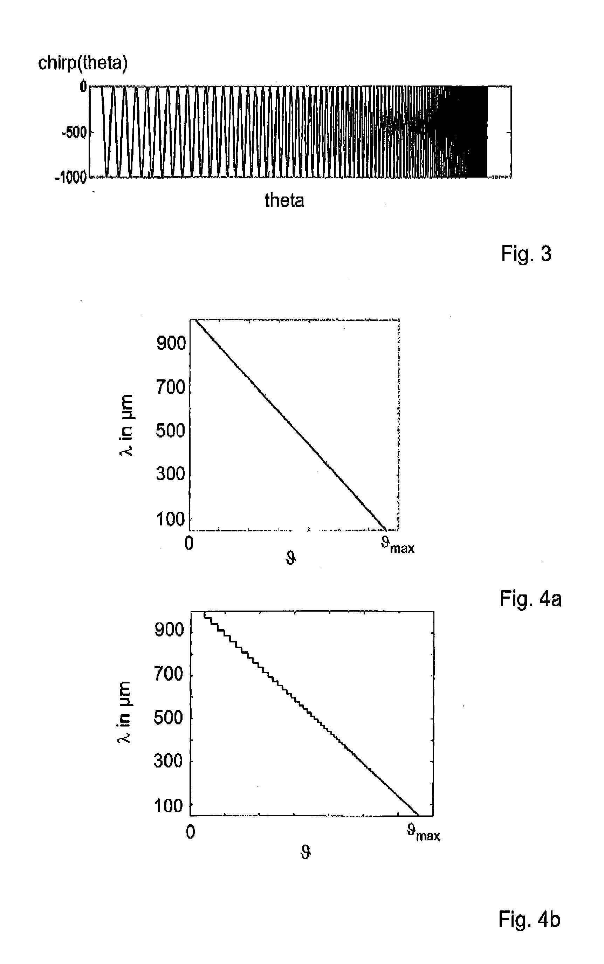

Figur 3 zeigt die Funktion *chirp*(ϑ). Es ist zu erkennen, dass die Ortsfrequenz mit zunehmendem Polarwinkel ϑ größer wird. Die Ortswellenlänge nimmt dadurch ab.
Figur 4 zeigt die Abhängigkeit der Ortswellenlänge vom Polarwinkel ϑ. Es ist zu erkennen, dass die Ortswellenlänge linear mit dem Polarwinkel ϑ zusammenhängt. Figur 4b zeigt die Abhängigkeit der Ortswellenlänge vom Polarwinkel ϑ für eine alternative Funktion f. Mit zunehmendem Polarwinkel ϑ fällt die Ortswellenlänge monoton, nicht aber streng monoton.
Es ist zu erkennen, dass ein Quotient aus der größten Ortswellenlänge und der kleinsten Ortswellenlänge sich

ungefähr zu $q = \dfrac{1000}{80} = 12{,}5$ errechnet.

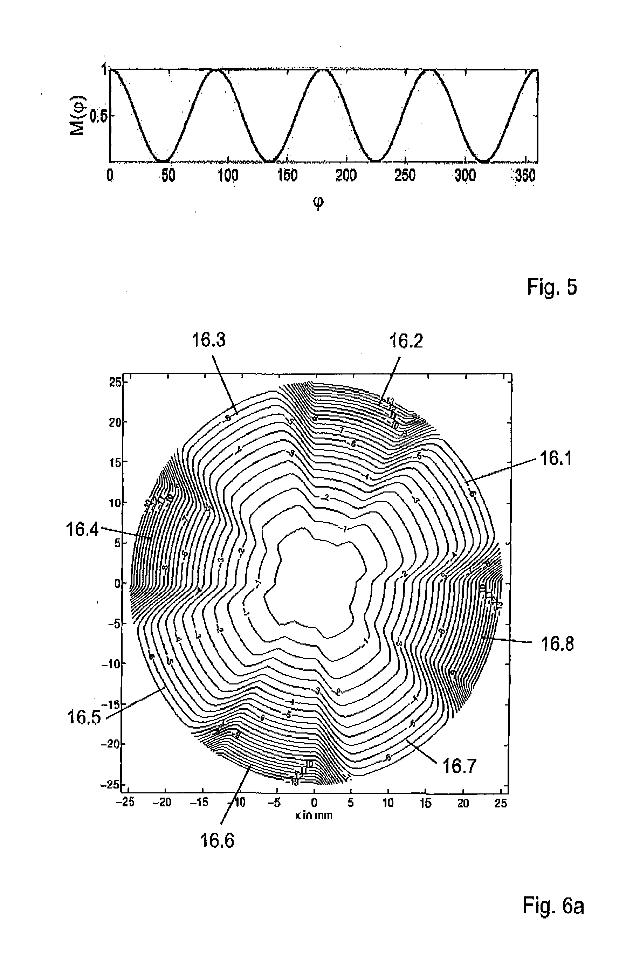

Figur 5 zeigt die grafische Darstellung der Funktion $M(\varphi)$.

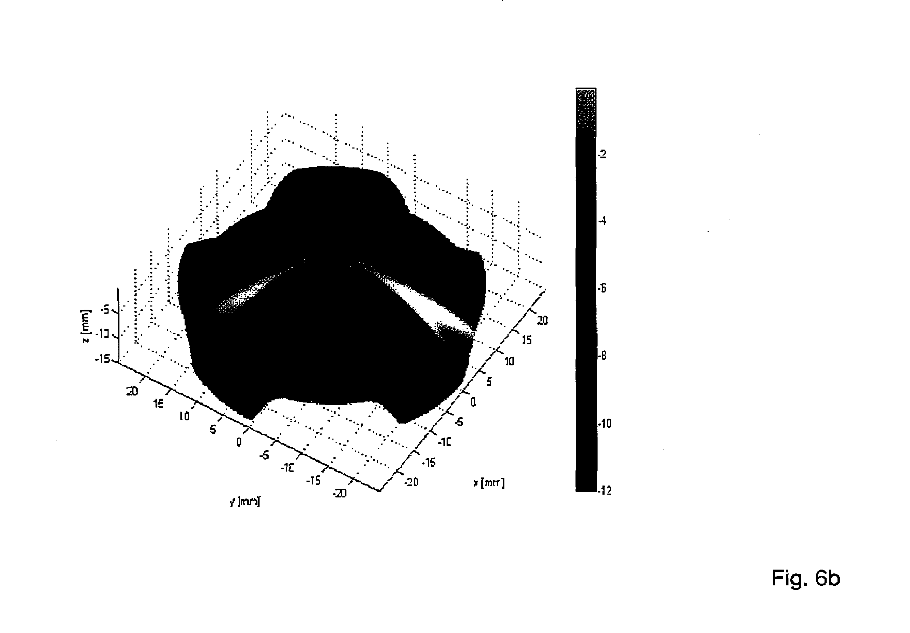

Figur 6 zeigt die Höhenlinien einer grafischen Darstellung der Funktion f für einen Asphärennormal gemäß einer weiteren Ausführungsform. Es ist zu erkennen, dass die Oberfläche der Kugel einen ersten Abschnitt 16.1, einen zweiten Abschnitt 16.2, einen dritten Abschnitt 16.3, einen vierten Abschnitt 16.4 sowie weitere Abschnitte 16.5, 16.6, 16.7 und 16.8 aufweist. Jeweils gegenüberliegende Abschnitte besitzen gleiche Krümmungsradien. So besitzen die Abschnitte 16.1 und 16.5 einen Radius R1, der gleich dem Kugelradius ist. In anderen Worten ist die Funktion f konstant 0. Im zweiten Abschnitt 16.2 und dem gegenüberliegenden Abschnitt 16.6 hat die Oberfläche einen Krümmungsradius R2, der im vorliegenden Fall das 0,6-fache des ersten Radius R1 beträgt, Die einzelnen Abschnitte sind, wie in Figur 6 gezeigt, längenkreisartig nebeneinander angeordnet und gehen in Azimutalrichtung differenzierbar ineinander über.

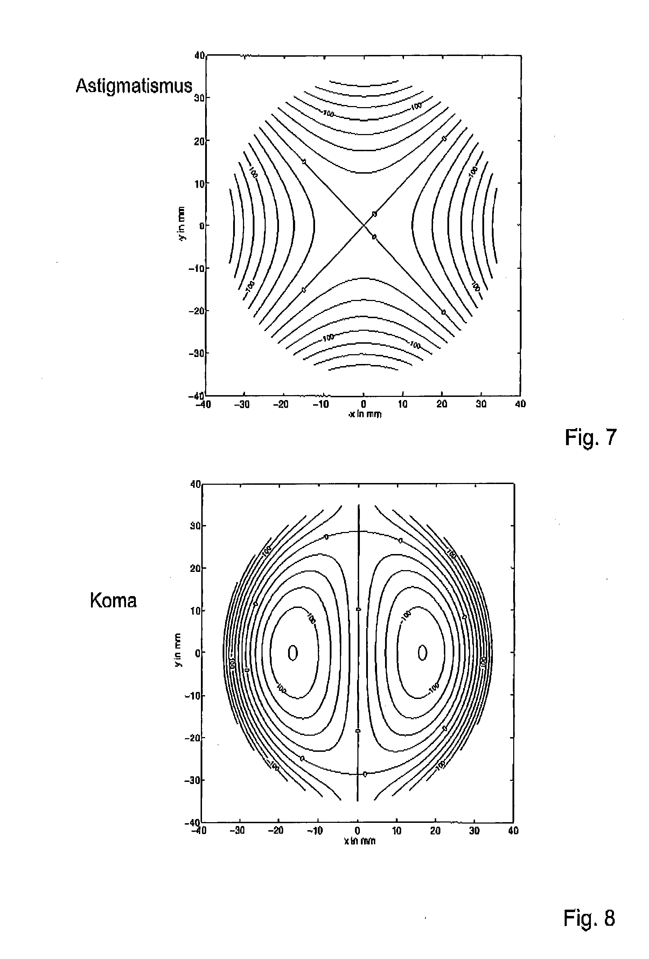

Figur 7 zeigt eine Höhenliniendarstellung der Funktion f für ein Asphärennormal gemäß einer weiteren Ausführungsform der Erfindung. Die Funktion f ist ein Zernike-Polynom: $\Delta r = \sqrt{6}\, k_1 \left( \dfrac{\vartheta}{\vartheta_{max}} \right)^2 \cos 2\varphi$ mit $k_1 = 1\ \mu\text{m}$.

Figur 8 zeigt einen Höhenliniendarstellung einer weiteren Funktion $f_1$ die ein Zernike-Polynom ist:

$$\Delta r = \sqrt{8}\, k_2 \left[ 3 \left( \dfrac{\vartheta}{\vartheta_{max}} \right)^3 - 2 \dfrac{\vartheta}{\vartheta_{max}} \cos \varphi \right]$$ mit $k_2 = 1\ \mu\text{m}$.

Ein Asphärennormal 10 wird hergestellt, indem zunächst eine Kugel oder einen Teils einer Kugel hergestellt wird. Die Formabweichung beträgt dabei weniger als 100 Nanometer von einer idealen Kugelform. Danach wird mit einem Diamantwerkzeug die oben beschriebene Struktur in die Oberfläche der Kugel oder des Teils der Kugel eingebracht. Nachfolgend wird das Asphärennormal 10 eingemessen.

**Bezugszeichenilste**

| | |
|---|---|
| 10 | Asphärennormal |
| 12 | Polarregion |
| 14 | Längenkreis |
| 16 | Abschnitt |

| | |
|---|---|
| $\vartheta$ | Polarwinkel |
| $\varphi$ | Azimutalwinkel |
| r | Radialkomponente |
| R1 | Kugelradius |
| $\Delta r$ | Abweichung von der Kugelgestalt |

**Patentansprüche**

1. Asphärennormal, das gebildet ist durch eine Kugel oder einen Teil einer Kugel, in dessen Oberfläche eine Struktur eingebracht ist,

   - wobei die Abweichung der Oberfläche von einer idealen Kugeloberfläche durch eine stetig differenzierbare Funktion f beschreibbar ist,
   - wobei die Struktur zumindest vier Referenzpunkte aufweist, in denen die Funktion f null ist und die erste Ableitung der Funktion null ist und
   - wobei die Funktion zwischen den Referenzpunkten von null verschieden ist.

2. Asphärennormal nach Anspruch 1, **dadurch gekennzeichnet, dass** die Funktion f eine Ortswellenlänge besitzt, wobei sich die Ortswellenlänge in Abhängigkeit von einem Polarwinkel oder einem Abstand von einem Nullpunkt stetig ändert.

3. Asphärennormal nach einem der vorstehenden Ansprüche, **dadurch gekennzeichnet, dass** die Funktion f ein Produkt ist aus

- einer nur von dem Polarwinkel, nicht aber dem Azimutalwinkel abhängenden Funktion und
- einer nur von dem Azimutalwinkel, nicht aber dem Polarwinkel abhängenden Funktion.

4. Asphärennormal nach einem der vorstehenden Ansprüche, **dadurch gekennzeichnet, dass** für die Funktion f gilt:

$$\Delta r = f(\vartheta, \varphi) = chirp(\vartheta) M(\varphi) \quad mit \quad chirp(\vartheta) = k\left(-1 + \cos\left[\frac{2\pi}{\lambda(\vartheta)}\vartheta\right]\right)$$

mit 10 nm < k < 10 $\mu$m, wobei $\lambda(\vartheta)$ so gewählt ist, dass die Ortswellenlänge $\lambda$ innerhalb eines Wellenzuges konstant ist.

5. Asphärennormal nach einem der vorstehenden Ansprüche 2 bis 4, **dadurch gekennzeichnet, dass** ein Quotient aus einer größten Ortswellenlänge und einer kleinsten Ortswellenlänge zumindest 5 beträgt.

6. Asphärennormal nach Anspruch 1, **dadurch gekennzeichnet, dass** die Funktion f ein Zernike-Polynom oder eine Summe von Zernike-Polynomen ist oder nur Astigmatismus-Terme oder nur Koma-Terme enthält,

7. Asphärennormal nach Anspruch 1, das gebildet ist durch eine Kugel oder einen Teil einer Kugel, mit einem Kugelradius (R1), in dessen Oberfläche eine Struktur eingebracht ist, **dadurch gekennzeichnet, dass**

- die Oberfläche einen ersten Abschnitt und zumindest einen zweiten Abschnitt hat, dass
- die Oberfläche im ersten Abschnitt eine relative Abweichung um höchstens $10^{-5}$ vom Kugelradius (R1) hat und dass
- die Oberfläche im zweiten Abschnitt einen Krümmungsradius (R2) hat, der betragsmäßig um zumindest 10 $\mu$m vom Kugelradius (R1) abweicht.

8. Asphärennormal nach Anspruch 7, **gekennzeichnet durch** zumindest vier Abschnitte, die längenkreisartig nebeneinander angeordnet sind und in Azimutalrichtung glatt ineinander übergehen.

9. Asphärennormal nach Anspruch 8, **dadurch gekennzeichnet, dass** die Oberfläche eine gerade Anzahl an Abschnitten hat, wobei jeweils einander gegenüberliegende Abschnitte den gleichen Krümmungsradius haben und wobei sich die Krümmungsradien paarweise um zumindest 10 $\mu$m unterscheiden.

10. Verfahren zum Herstellen eines Asphärennormals, mit den Schritten:

(i) Herstellen einer Kugel oder eines Teils einer Kugel mit einer Formabweichung von weniger als 100 Nanometern von einer idealen Kugelform,
(ii) Einbringen einer Struktur in eine Oberfläche der Kugel oder des Teils der Kugel, wobei eine Abweichung der Oberfläche von einer idealen Kugeloberfläche durch eine zweimal stetig differenzierbare Funktion f beschreibbar ist,
(iii) wobei die Struktur zumindest vier Referenzpunkte aufweist, in denen die Funktion null ist, die erste Ableitung der Funktion null ist und vorzugsweise zudem die zweite Ableitung null ist.

Fig. 1a

Fig. 1b

Fig. 2

EP 2 871 443 A1

Fig. 3

Fig. 4a

Fig. 4b

Fig. 5

Fig. 6a

Fig. 6b

Astigmatismus

Fig. 7

Koma

Fig. 8

Europäisches Patentamt
European Patent Office
Office européen des brevets

## EUROPÄISCHER RECHERCHENBERICHT

Nummer der Anmeldung

EP 14 00 3772

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 729 861 A (LYNCH FRANCIS DES [US] ET AL) 8. März 1988 (1988-03-08) * Spalte 6, Zeilen 31-50; Abbildungen 4,5 * ----- | 1-10 | INV. G01B21/04 G01B3/30 |
| X | WO 2013/068044 A1 (ZEISS IND MESSTECHNIK GMBH [DE]; BERNHARDT RALF [DE]; FUCHS ANDREAS [D) 16. Mai 2013 (2013-05-16) | 1-9 | |
| A | * Zusammenfassung; Abbildungen 1-4 * * Seite 20, Zeile 28 - Seite 21, Zeile 33 * ----- | 10 | |
| A,D | DE 10 2006 035022 A1 (ZEISS CARL SMT AG [DE]) 31. Januar 2008 (2008-01-31) * Zusammenfassung; Abbildungen 8,9 * * Absätze [0055] - [0058] * ----- | 1-10 | |

RECHERCHIERTE SACHGEBIETE (IPC)

G01B

Der vorliegende Recherchenbericht wurde für alle Patentansprüche erstellt

| Recherchenort | Abschlußdatum der Recherche | Prüfer |
|---|---|---|
| München | 2. März 2015 | Passier, Martinus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 14 00 3772

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-03-2015

| Im Recherchenbericht angeführtes Patentdokument | Datum der Veröffentlichung | Mitglied(er) der Patentfamilie | Datum der Veröffentlichung |
|---|---|---|---|
| US 4729861 A | 08-03-1988 | KEINE | |
| WO 2013068044 A1 | 16-05-2013 | EP 2776785 A1<br>JP 2014535057 A<br>WO 2013068044 A1 | 17-09-2014<br>25-12-2014<br>16-05-2013 |
| DE 102006035022 A1 | 31-01-2008 | CN 101495833 A<br>DE 102006035022 A1<br>DE 112007001660 A5<br>JP 5481192 B2<br>JP 2009544953 A<br>US 2009128829 A1<br>US 2012127481 A1<br>WO 2008012091 A2 | 29-07-2009<br>31-01-2008<br>10-06-2009<br>23-04-2014<br>17-12-2009<br>21-05-2009<br>24-05-2012<br>31-01-2008 |

EPO FORM P0461

Für nähere Einzelheiten zu diesem Anhang : siehe Amtsblatt des Europäischen Patentamts, Nr.12/82

**EP 2 871 443 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006035022 A1